# EUROPEAN PATENT APPLICATION

(11) **EP 4 491 408 A1**
(43) Date of publication of application: **15.01.2025**
(21) Application number: 24186940.3
(22) Date of filing: 05.07.2024
(51) Int. Cl.: B41J 29/13, B41J 29/02, B41J 2/155

(54) **RECORDING APPARATUS**

(30) Priority: 12.07.2023 JP 2023114786
(71) Applicant: CANON KABUSHIKI KAISHA, Tokyo 146-8501 (JP)
(72) Inventor: MATSUMOTO, Toshiya, Tokyo, 146-8501 (JP); KOHNOTOH, Atsushi, Ohta-ku, 146-8501 (JP); TAKEDA, Daiju, Ohta-ku, 146-8501 (JP); TAKENAGA, Ken, Ohta-ku, 146-8501 (JP); TANAKA, Kousuke, Ohta-ku, 146-8501 (JP); YAMAGUCHI, Shuhei, Ohta-ku, 146-8501 (JP)
(74) Representative: Canon Europe Limited

(57) **Abstract**

A recording apparatus includes: a recording unit (3); a cover (2) openable and closable with respect to a housing (8); an opening/closing mechanism that controls opening and closing of the cover; a carriage (4) that includes a support portion (4a), mounts the recording unit thereon, and moves, in a movement direction intersecting a transport direction of a sheet, between a first position and a second position on the opening/closing mechanism side with respect to the first position; and a guide portion (7) that guides the carriage. The support portion protrudes in the movement direction toward the opening/closing mechanism side with respect to the recording unit. The recording unit overlaps the opening/closing mechanism as seen from the movement direction. The support portion on the opening/closing mechanism side overlaps the opening/closing mechanism as seen from the transport direction when the carriage is at the second position.

## Description

### BACKGROUND OF THE INVENTION

### Field of the Invention

The present invention relates to a recording apparatus that covers a housing with a cover that opens and closes.

### Description of the Related Art

Japanese Patent Laid-Open Publication No. 2019-31029 describes a recording apparatus that performs recording of an image on a sheet while a recording unit mounted on a carriage in a body portion moves in a movement direction. A scanner section that performs scanning of a document is coupled to an upper part of the body portion in such a way that the scanner section is openable and closable. Opening and closing of the scanner section can be performed by using a damper mechanism including a rack gear and a pinion gear. When the scanner section is held in an open position, a user can perform a maintenance operation of the inside of the body portion. When the user returns the scanner section to a closed position, the recording apparatus can perform recording of an image and scanning of a document.

However, in the recording apparatus, the damper mechanism is disposed outside of the movement width of the carriage as seen from the sheet transport direction. As a result, the width of the recording apparatus is large.

### SUMMARY OF THE INVENTION

The present invention in its aspect provides a recording apparatus as specified in claims 1 to 14.

Further features of the present invention will become apparent from the following description of embodiments with reference to the attached drawings.

### BRIEF DESCRIPTION OF THE DRAWINGS

Fig. 1 is a perspective view of a recording apparatus when a scanner section is in a closed position.
Fig. 2 is a perspective view of the recording apparatus when the scanner section is in an open position.
Fig. 3 is a perspective view illustrating the inside of a lower housing when the scanner section is in the closed position.
Fig. 4 is a perspective view illustrating the inside of the lower housing when the scanner section is in the open position.
Figs. 5A and 5B illustrate a carriage on which a recording unit is mounted.
Figs. 6A to 6C are perspective views illustrating the carriage and the recording unit.
Figs. 7A and 7C are bottom views of the carriage and the recording unit.
Fig. 8 illustrates an opening/closing mechanism when the scanner section is in the closed position.
Fig. 9 illustrates the opening/closing mechanism when the scanner section is in the open position.
Fig. 10 illustrates a rail mechanism.
Fig. 11 illustrates the positional relationship between the carriage and the opening/closing mechanism.
Fig. 12 illustrates the positional relationship between the carriage and a drive mechanism of a transport roller.
Fig. 13 illustrates the disposition of a cable that connects an operation panel and a control board.
Fig. 14 illustrates an opening/closing mechanism according to a second embodiment.

### DESCRIPTION OF THE EMBODIMENTS

Hereafter, embodiments of the present invention will be described with reference to the drawings. Note that the dimensions, the materials, the shapes, and the relative dispositions of components described in the embodiments can be changed as appropriate in accordance with the configuration, various conditions, and the like of an apparatus to which the invention is applied, and are not intended to limit the scope of the present invention to the following embodiments.

### First Embodiment

### Recording Apparatus

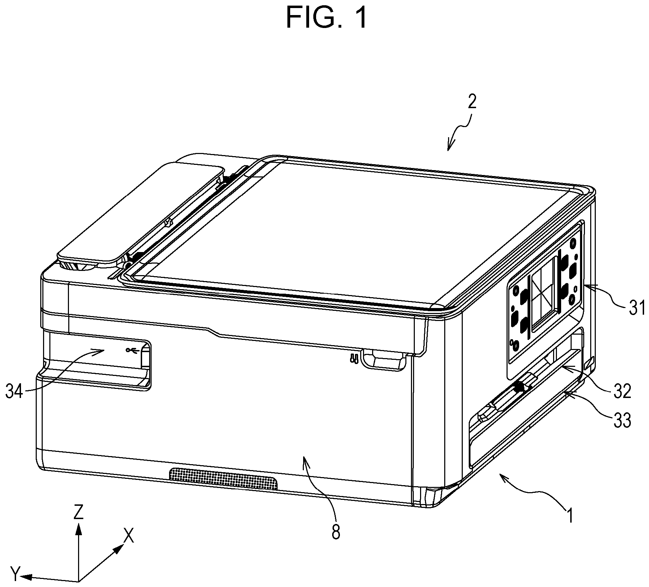

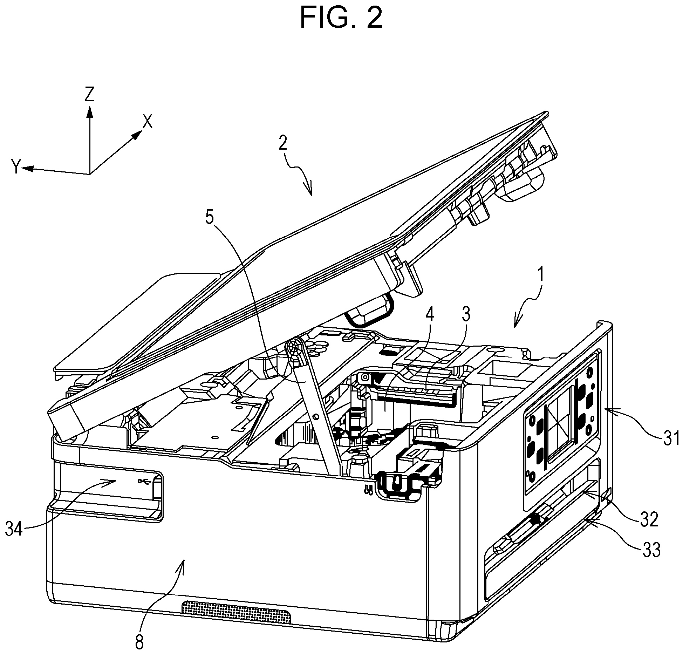

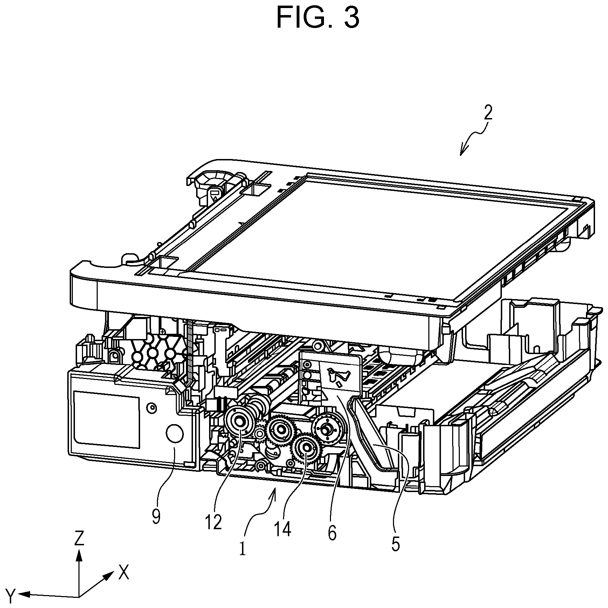

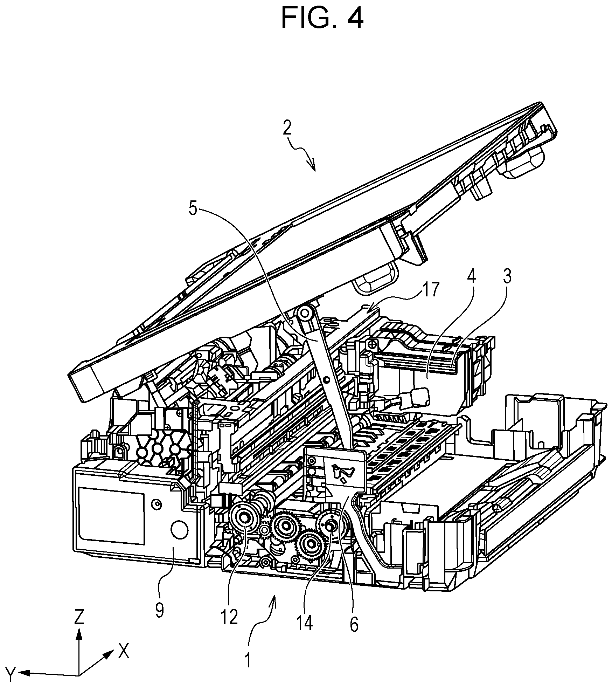

A recording apparatus according to a first embodiment will be described with reference to the drawings. In the recording apparatus, a scanner section 2, which performs scanning of an image, is coupled to an upper part of a body portion 1, which performs recording of an image, in such a way that the scanner section 2 is openable and closable. The scanner section 2 can be moved by a user to an open position in which the body portion 1 is opened and a closed position in which the body portion 1 is closed. Fig. 1 is a perspective view of the recording apparatus when the scanner section 2 is in the closed position. Fig. 2 is a perspective view of the recording apparatus when the scanner section 2 is in the open position. Fig. 3 is a perspective view illustrating the inside of a lower housing 8 when the scanner section 2 is in the closed position. Fig. 4 is a perspective view illustrating the inside of the lower housing 8 when the scanner section 2 is in the open position. In the figures, the arrow X represents the X axis, the arrow Y represents the Y axis, and the arrow Z represents the Z axis. The movement direction of a carriage 4 is parallel to the X direction, and the sheet transport direction is parallel to the Y direction. The XY-plane defined by the X direction and the Y direction is a horizontal plane, the Z direction perpendicular to the horizontal plane is the vertical direction, and it is assumed that the recording apparatus is set on the horizontal plane.

In the body portion 1, the lower housing 8 including an outer panel accommodates a recording section that records an image and a transporting section that transports a sheet. The outer panel of the lower housing 8 is constituted by a front side on which an operation panel 31 is disposed, a back side opposite to the front side, two lateral sides connecting the front side and the back side, and a bottom side. In the present embodiment, the lateral sides may be represented as the left side and the right side with respect to the front side. The operation panel 31 includes a button for operating the recording apparatus and a display for displaying the state of the recording apparatus. An output opening 32 for outputting a recorded sheet is disposed below the operation panel 31. A tray 33 for stacking sheets on which images are to be recorded is disposed below the output opening 32 and is inserted into and drawn out from the lower housing 8. The recording apparatus may be configured to have an output tray, which can be drawn out, between the output opening 32 and the tray 33. A power supply 9 that supplies a DC current to the recording apparatus is disposed in the body portion 1 adjacent to the outer panel on the back side and adjacent to the outer panel on the left side. A connector 34 for communicating with an external device is disposed above the power supply 9 and on the outer panel on the left side.

The scanner section 2 includes a scanning sensor for scanning a document that is placed on a document table. The scanner section 2 is openable and closable around a hinge that is provided on an upper part of the back side of the body portion 1. That is, the scanner section 2 functions as a cover that closes the lower housing 8 that accommodates the recording section, the transporting section, and the like. It is possible to perform recording of an image and scanning of a document when the scanner section 2 is in the closed position. The recording apparatus may be configured to have a cover that does not have the scanner section 2. The scanner section 2 may have a transport mechanism that transports a document.

Opening and closing of the scanner section 2 is controlled by an opening/closing mechanism while being manually performed by a user. The opening/closing mechanism can hold the scanner section 2 in the open position, release holding to move the scanner section 2 to the closed position, and maintain the closed position. The opening/closing mechanism includes a stay 5 that is swingably supported by the scanner section 2 and a rail mechanism 6 that is provided in the body portion 1. A projecting end portion 5a of the stay 5 is coupled to the rail mechanism 6 and can move along a groove of the rail mechanism 6.

The recording section includes a platen that supports a transported sheet, a recording unit 3 that faces the platen and records an image on the sheet, and the carriage 4 that moves the recording unit 3. The carriage 4 can reciprocate in the X direction, which is the movement direction, while mounting the recording unit 3 thereon. The carriage 4 is driven by a driving motor, a belt, a pulley, and the like, which are not shown. The transporting section includes a transport roller 10 and an output roller 11 that transport a sheet, which has been supplied from the tray 33, in the transport direction. The transport direction and the movement direction intersect each other, and are perpendicular to each other in the present embodiment. A sheet may be supplied from a sheet feeder that is provided on an upper part of the outer panel on the back side.

Here, recording of an image will be described. An operation of recording of an image is composed of a sheet transport operation and an ink ejection operation. An image to be recorded is obtained from an external device connected to the connector 34 or from the scanner section 2. In the transport operation, the transport roller 10 transports a sheet, which has been supplied from the tray 33, by a predetermined distance in the transport direction (-Y direction). Next, in the ejection operation, the recording unit 3 moves while ejecting ink from a nozzle 23. The image is recorded on the sheet while the transport operation and the ejection operation are alternately performed. The sheet, on which the image has been recorded, is output from the output opening 32 by the output roller 11. The transport roller 10 is coupled to a transport roller gear 12, and the output roller 11 is coupled to an output roller gear 14. The transport roller 10 and the output roller 11 are driven by a transport motor (not shown).

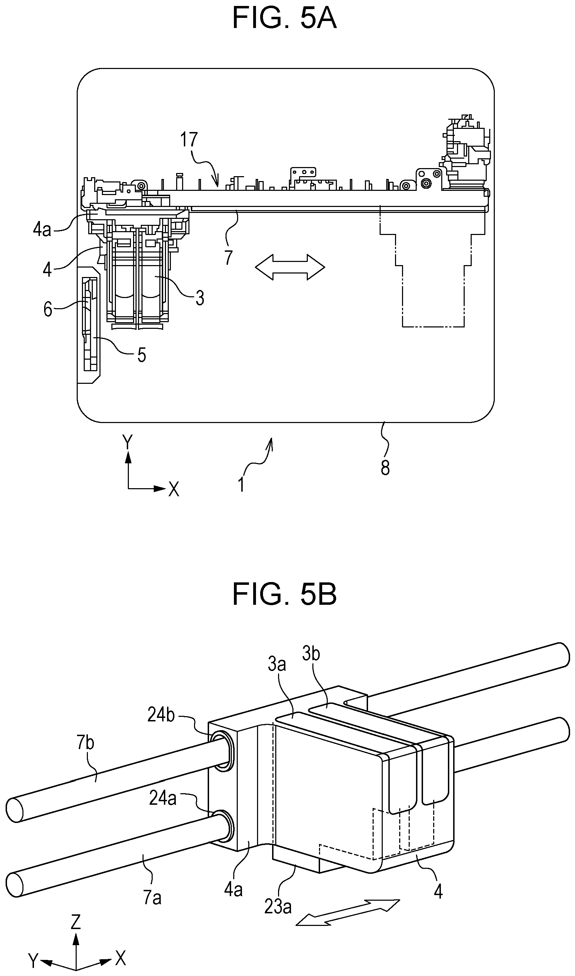

Figs. 5A and 5B illustrate the carriage 4 on which the recording unit 3 is mounted. Fig. 5A is a top view of the carriage 4. The carriage 4 reciprocates between a starting position and a turnaround position. The two-dot chain line represents the carriage 4 at the starting position, and the solid line represents the carriage 4 at the turnaround position. Fig. 5B is a schematic perspective view of the carriage 4. The dotted line represents the recording unit 3 mounted on the carriage 4. The carriage 4 can mount a recording unit 3a and a recording unit 3b that are a plurality of recording units 3. The recording unit 3 includes a tank that contains ink and the nozzle 23 that ejects ink. The ink is, for example, black ink, cyan ink, magenta ink, or yellow ink. When the ink is depleted, a user can detach/attach the recording unit 3 from/to the carriage 4. The recording unit 3 is mounted on the carriage 4 in such a way that the nozzle 23 faces a sheet. The recording unit 3 may be configured to supply ink through a tube.

The lower housing 8 includes a frame 17 that supports movement of the carriage 4. The carriage 4 can reciprocate between the starting position and the turnaround position due to a guide portion 7 of the frame 17. A support portion 4a of the carriage 4 protrudes to both of the starting position side and the turnaround position side relative to the recording unit 3 in the movement direction of the carriage 4. The support portion 4a has a sliding surface 24a that slides over a guide surface of the guide portion 7. The guide portion 7 is provided on the frame 17. The frame 17 is formed by bending a metal plate and fixed to the lower housing 8. In Fig. 5A, the guide portion 7 is a flat rail that is divided into upper and lower rails. Accordingly, in this case, the guide surface is a flat surface. The support portion 4a may be integrally formed with or may be separated from a portion that holds the recording unit 3.

In Fig. 5B, the guide portion 7 of the frame 17, which includes the upper and lower rails in Fig. 5A, is simplified as two shafts each having a circular cross section. The support portion 4a of the carriage 4 is simplified as a rectangle, and protrudes to both sides with respect to the recording unit 3 in the movement direction of the carriage 4. The carriage 4 has, in a lower part and an upper part thereof, the sliding surface 24a and a sliding surface 24b that respectively slide over guide portions 7a and 7b. In this case, the guide surface may be a curved surface. The sliding surface 24a and the sliding surface 24b are disposed on both sides with respect to the recording unit 3 in the movement direction of the carriage 4. Since the sliding surfaces 24a and 24b are respectively in contact with the guide surfaces of the guide portions 7a and 7b, the recording unit 3 can reciprocate in the X direction while maintaining the posture thereof.

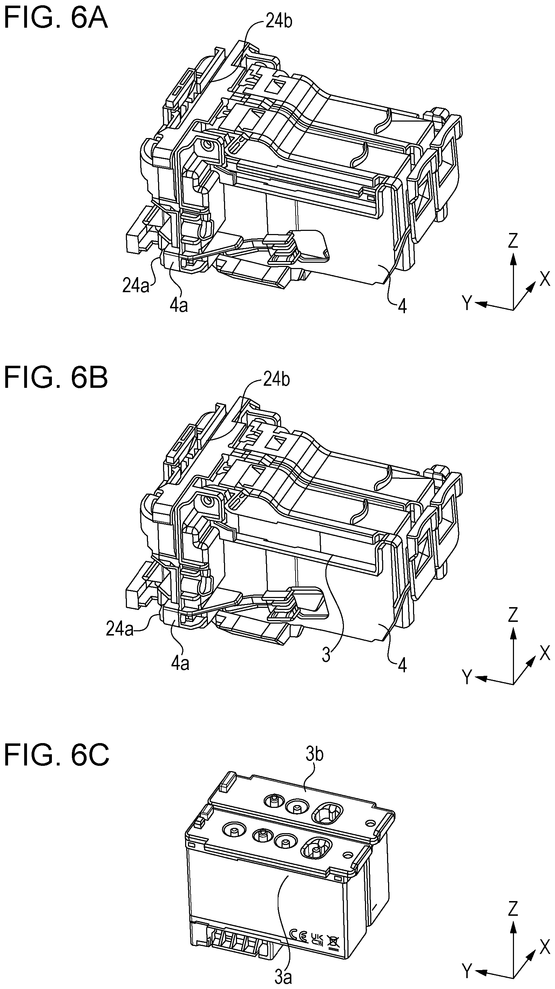

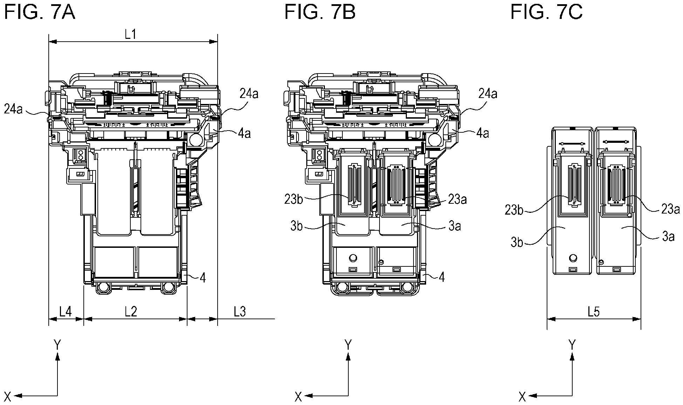

Figs. 6A to 6C are perspective views illustrating the carriage 4 and the recording unit 3. Fig. 6A illustrates the carriage 4 on which the recording unit 3 is not mounted, Fig. 6B illustrates the carriage 4 on which the recording unit 3 is mounted, and Fig. 6C illustrates two recording units 3. Figs. 7A to 7C are bottom views of the carriage 4 and the recording unit 3. Fig. 7A illustrates the carriage 4 on which the recording unit 3 is not mounted, Fig. 7B illustrates the carriage 4 on which the recording unit 3 is mounted, and Fig. 7C illustrates two recording units 3. The sliding surface 24a on the lower side of the carriage 4 is disposed on both sides with respect to the recording unit 3 in the movement direction of the carriage 4, and the sliding surface 24b on the upper side of the carriage 4 is disposed at one position near the center. The length of the recording unit 3 in the transport direction is greater than the width of the recording unit 3 in the movement direction. Thus, the tank can contain enough ink even when the width of the recording unit 3 is small. The distance L1 between two sliding surfaces 24a of the carriage 4 is greater than the width L5 of two recording units 3. For example, L1 may be greater than 1.5 times L5. That is, when accelerating and decelerating, the carriage 4 suffers from an effect of a rotational force around the transport direction. When the distance in the movement direction between the sliding surfaces 24a on both sides is sufficiently larger than the width of the recording units 3 in the movement direction, the effect of this rotational force is reduced and the movement of the carriage 4 becomes stable. Since the distance between the sliding surfaces 24a on both sides is greater than the width of the recording units 3, a space having a length L3 is generated on the turnaround position side and the opening/closing mechanism does not easily interfere with the carriage 4. The length L3 of the space on the turnaround position side may be greater than the length L4 of a space on the starting position side.

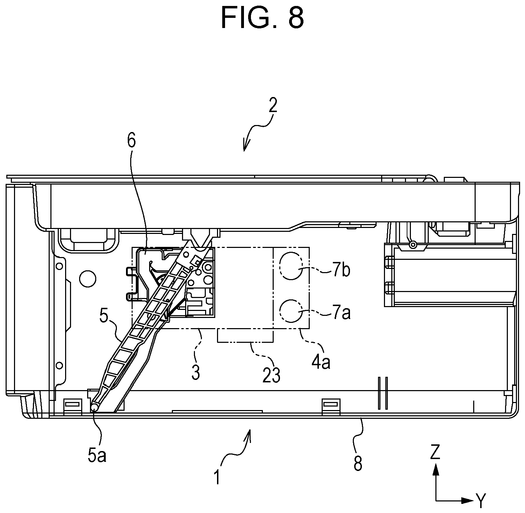

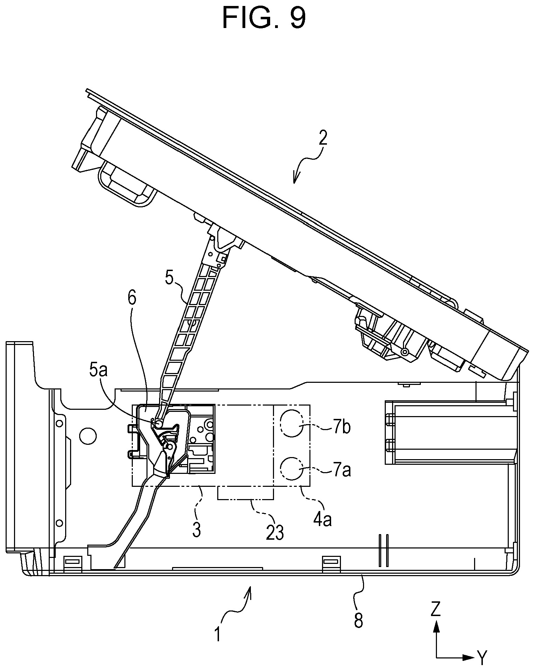

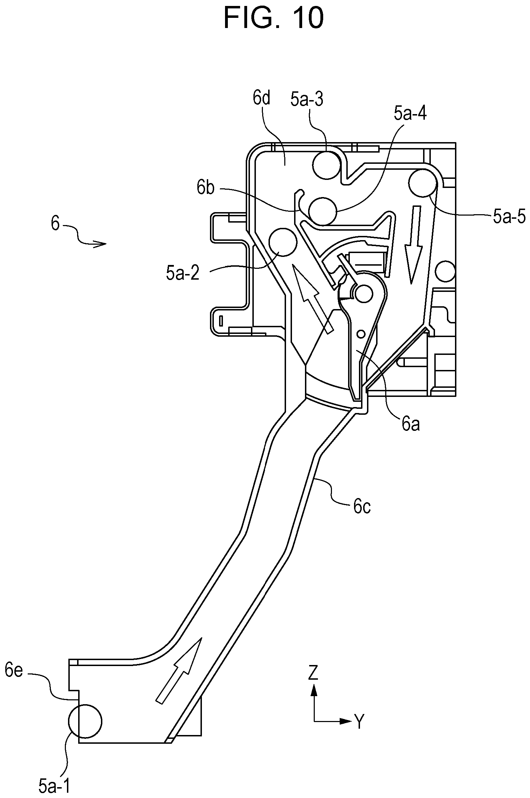

Figs. 8 to 10 illustrate the opening/closing mechanism that controls opening and closing of the scanner section 2. Fig. 8 illustrates the opening/closing mechanism when the scanner section 2 is in the closed position. Fig. 9 illustrates the opening/closing mechanism when the scanner section 2 is in the open position. Fig. 10 illustrates the rail mechanism 6. In Figs. 8 and 9, schematic views of the recording unit 3, the carriage 4, and the guide portion 7 are represented by two-dot chain lines. The opening/closing mechanism includes the stay 5 and the rail mechanism 6. The rail mechanism 6 is disposed adjacent to the outer panel on the left side with respect to the stay 5. One end of the stay 5 is swingably supported by the scanner section 2, and the other end includes the projecting end portion 5a. The projecting end portion 5a can move along the groove of the rail mechanism 6. The stay 5 is urged counterclockwise (toward the outer panel on the back side) with respect to the scanner section 2 in Fig. 9.

The rail mechanism 6 includes an inclined portion 6c that becomes closer to the output opening 32 with decreasing distance from the bottom surface of the body portion 1, a loop portion 6d that guides the projecting end portion 5a in a loop shape, and a flapper 6a that determines the movement path of the projecting end portion 5a. An end portion 6e of the rail mechanism 6 is below the frame 17. When the scanner section 2 is in the closed position, the projecting end portion 5a of the stay 5 is located at a position Sa-1 that is close to the end portion 6e of the rail mechanism 6. As the scanner section 2 is being opened, the projecting end portion 5a moves along the inclined portion 6c of the rail mechanism 6, is guided by the flapper 6a, passes a position 5a-2, and reaches a corner portion at a position 5a-3. The flapper 6a is urged counterclockwise in Fig. 10, and the projecting end portion 5a can move in the loop portion 6d in one direction. At the position 5a-3, movement of the projecting end portion 5a in the Z direction and the Y direction is restrained by the corner portion of the rail mechanism 6. As a result, the scanner section 2 becomes unable to move in the opening direction. When the scanner section 2 is moved from the position 5a-3 in the closing direction, the projecting end portion 5a becomes engaged with a latch portion 6b at a position 5a-4. As a result, the stay 5 can hold the scanner section 2 in the open position, because the stay 5 receives the weight of the scanner section 2 in a state in which the stay 5 is engaged with the latch portion 6b of the rail mechanism 6. When the scanner section 2 is in the open position, a user can perform maintenance of the inside of the body portion 1. Examples of the maintenance include detachment and attachment of the recording unit 3 and removal of a sheet when jamming occurs.

Next, when the scanner section 2 held in the open state is moved in the opening direction, the projecting end portion 5a moves in the Y direction due to the counterclockwise urging force and reaches a corner portion at a position 5a-5. At the position 5a-5, the projecting end portion 5a becomes restrained by the corner portion of the rail mechanism 6 and becomes unable to move in the opening direction. When the projecting end portion 5a moves downward from the state of being restrained by the corner portion at the position 5a-5, the projecting end portion 5a moves along the groove of the rail mechanism 6 and pushes open the flapper 6a. The downward movement of the projecting end portion 5a from the position 5a-5 is enabled by the weight of the scanner section 2 or an operation by a user. Further, the projecting end portion 5a moves downward along the inclined portion 6c and reaches the position 5a-1.

When the projecting end portion 5a reaches the position 5a-1, the scanner section 2 becomes stable in a state in which the scanner section 2 closes the lower housing 8. As a result, the scanner section 2 and the body portion 1 return to an ordinary usable state. As an operation by a user, the user manually opens the scanner section 2 from the closed position until the scanner section 2 stops, and then releases his/her hand from the scanner section 2. When the projecting end portion 5a becomes engaged with the latch portion 6b, the scanner section 2 is held in the open position. To return the scanner section 2 to the closed position, the user opens the scanner section 2 from the open position until the scanner section 2 stops, and then releases his/her hand or pushes down the scanner section 2. Then, the scanner section 2 moves downward to the closed position due to its own weight. In this way, the opening/closing mechanism holds the scanner section 2 in the open position, releases the open position, holds the scanner section 2 in the closed position, and further controls the movement between the open position and the closed position.

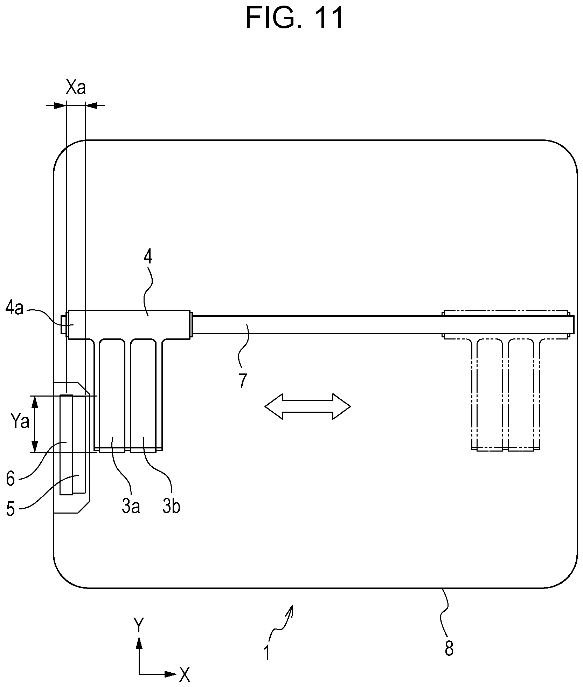

Fig. 11 illustrates the positional relationship between the opening/closing mechanism and the carriage 4. The turnaround position, at which the carriage 4 is closest to the opening/closing mechanism in the sheet-width direction, is represented by a solid line, and the starting position, at which the carriage 4 is farthest from the opening/closing mechanism, is represented by a two-dot chain line. The turnaround position differs in accordance with the sheet width. Here, a case where the sheet width is the largest is illustrated. As seen from the movement direction of the carriage 4 (the X direction), the opening/closing mechanism overlaps at least a front portion of the recording unit 3 in a region Ya. In other words, the region Ya is a region where the recording unit 3 and the opening/closing mechanism overlap when projected onto the Y axis. On the other hand, as seen from the movement direction, the opening/closing mechanism does not overlap the support portion 4a. As seen from the transport direction (the Y direction), when the carriage 4 is at the turnaround position, the stay 5 and the rail mechanism 6 overlap the support portion 4a in a region Xa. In other words, the region Xa is a region where the carriage 4 and the opening/closing mechanism overlap when projected onto the X axis. With this configuration, the width of the recording apparatus in the sheet-width direction can be reduced. One of the stay 5 or the rail mechanism 6 may be configured to overlap the support portion 4a.

If the opening/closing mechanism is disposed on the hinge side that does not overlap the recording unit 3 in the transport direction, a force that acts on components increases due to leverage when the scanner section 2 is held in the open position. In this case, it becomes necessary to increase the strengths of the stay 5, the rail mechanism 6, and the scanner section 2. Therefore, a space for reinforcement becomes necessary, and the cost increases in order to increase the strengths.

On the other hand, if the opening/closing mechanism is disposed in a front portion so that the opening/closing mechanism does not overlap the recording unit 3 in the transport direction, the stroke of the stay 5 becomes insufficient and the open angle of the scanner section 2 decreases. In this case, it becomes difficult to perform operations such as detachment and attachment of the recording unit 3, removal of a sheet when jamming occurs, and the like.

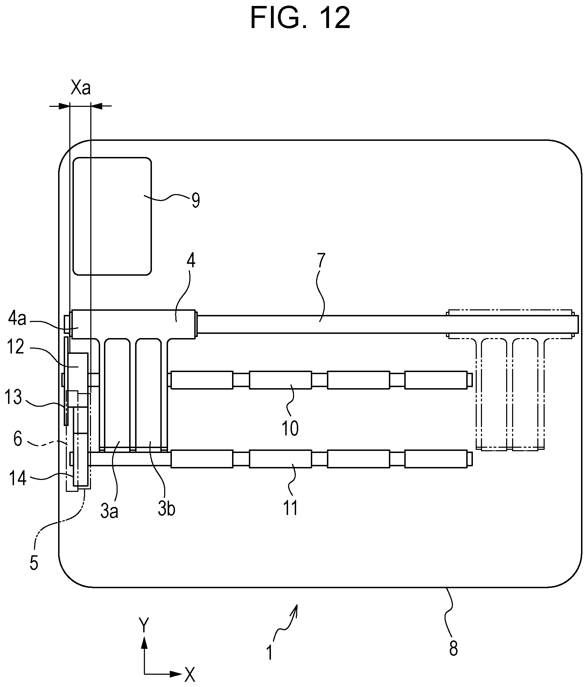

Fig. 12 illustrates the positional relationship between the carriage 4 and a drive mechanism of the transport roller 10. The carriage 4 at the turnaround position is represented by a solid line, and the carriage at the starting position is represented by a two-dot chain line. The stay 5 and the rail mechanism 6 are each represented by a two-dot chain line. The guide portion 7, the transport roller 10, and the output roller 11 are arranged downstream in the transport direction. The drive mechanism is a mechanism that transmits a driving force from the transport motor (not shown) to the transport roller 10 and the output roller 11.

The transport roller gear 12, the output roller gear 14, and an intermediate gear are included in the drive mechanism. The transport motor can transport a sheet downstream in the transport direction by rotating the transport roller 10 and the output roller 11 in the same direction. The transport roller 10 and the output roller 11 are disposed parallel to the guide portion 7. The transport roller gear 12 is disposed between the outer panel on the left side and the transport roller 10 and transmits the driving force to the transport roller 10. A code wheel 13 for measuring the rotation amount of the transport roller 10 is disposed coaxially with the transport roller 10. A sensor (not shown) measures the rotation amount of the transport roller 10 by reading the code wheel 13. By measuring the rotation amount, a controller can control the sheet transport distance and the sheet transport speed. The code wheel 13 may be disposed to overlap the region Xa as seen from the transport direction, or may be disposed not to overlap the region Xa because of having a large diameter. Likewise, the output roller gear 14 is disposed between the outer panel on the left side and the output roller 11 and transmits the driving force to the output roller 11. The transport roller gear 12 and the output roller gear 14 are disposed at positions that overlap the region Xa as seen from the transport direction. The width of the recording apparatus can be reduced, because a part of the drive mechanism is disposed at a position that overlaps the region Xa in this way. Moreover, the power supply 9 is disposed at a position on the opening/closing mechanism side of the recording apparatus and between the frame 17 and the outer panel on the back side. A part of the power supply 9 overlaps the region Xa as seen from the transport direction.

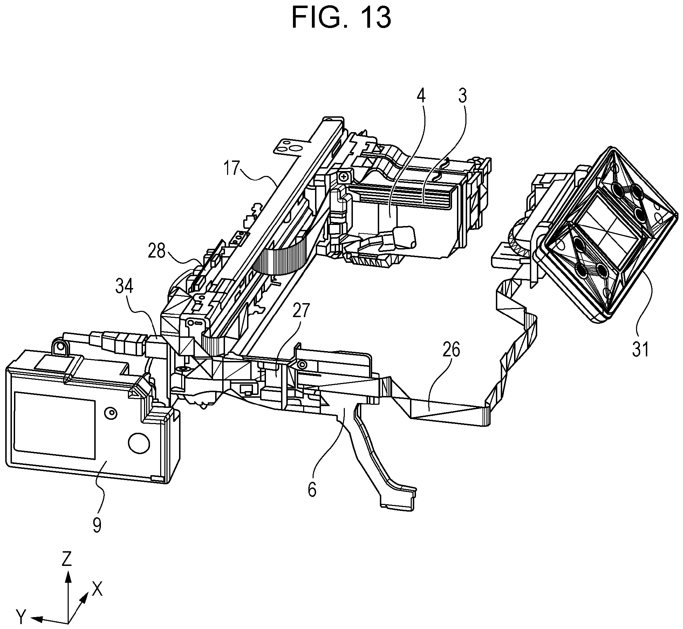

Fig. 13 illustrates the disposition of a cable 26 that connects the operation panel 31 and a control board 28. The control board 28 is disposed along the frame 17 on a side of the frame 17 adjacent to the outer panel on the back side. The connector 34 may be disposed on the control board 28. The control board 28 can communicate with an external device via the connector 34. The cable 26 is a flexible flat cable (FFC) and connects the control board 28 and the operation panel 31. The cable 26 is routed in a space between the outer panel on the left side and the rail mechanism 6. On the reverse side of the loop portion 6d of the rail mechanism 6, the rail mechanism 6 has a holding portion that can hold the cable 26. A ferrite core 27 that reduces noise from the cable 26 is disposed on the cable 26. An extension portion from the rail mechanism 6 holds the ferrite core 27.

As described above, the opening/closing mechanism is disposed at a position that overlaps the recording unit 3 as seen from the movement direction of the carriage 4, and is disposed at a position that overlaps the support portion 4a as seen from the sheet transport direction.

With this configuration, the width of the recording apparatus can be reduced. Moreover, a sufficient open angle of the scanner section 2 can be realized.

### Second Embodiment

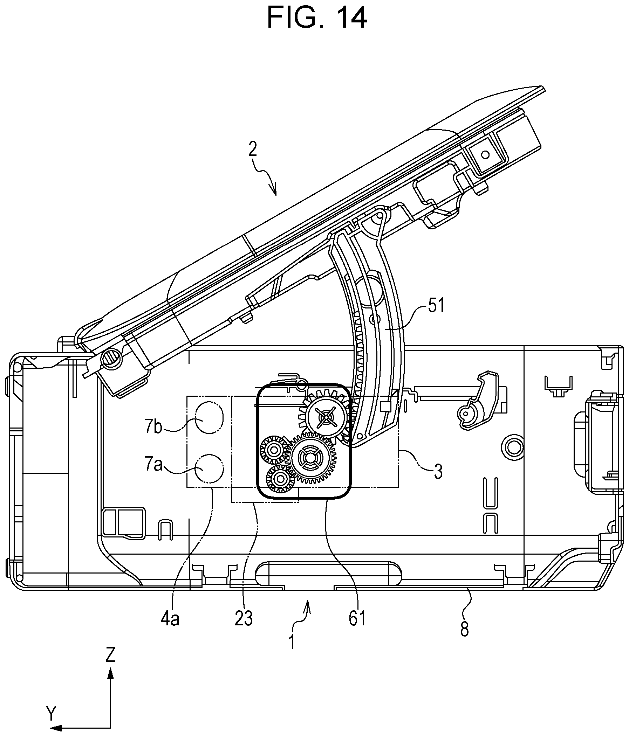

Fig. 14 illustrates an opening/closing mechanism of a scanner section 2 according to a second embodiment. The recording unit 3, the carriage 4, and the guide portion 7 are represented by two-dot chain lines. In the second embodiment, the stay 5 and the rail mechanism 6 of the opening/closing mechanism are replaced with components that use other methods. The dispositions of these are similar to those in the first embodiment. That is, the opening/closing mechanism is disposed at a position that overlaps a front portion of the recording unit 3 as seen from the movement direction of the carriage 4, and is disposed at a position that overlaps the support portion 4a at the turnaround position as seen from the sheet transport direction.

In the opening/closing mechanism, a stay 51 having a fan-shaped gear is provided on the scanner section 2 and is coupled to a gear mechanism 61 provided in the body portion 1. The gear mechanism 61 includes a coupling gear at the first stage, a braking unit at the final stage, and an intermediate gear. As the coupling gear at the first stage moves by a small distance in the swinging direction of the stay 51, drive is transmitted to the braking unit at the final stage when the scanner section 2 is moving in the closing direction. On the other hand, when the scanner section 2 is moving in the opening direction, the coupling gear at the first stage moves substantially upward by a small distance, and drive transmission is interrupted. With this configuration, it is possible to brake only the rotation of the scanner section 2 in the closing direction. The scanner section 2 is of a free-stop type that can maintain the posture thereof in any position between the open position and the closed position.

The braking unit at the final stage may be replaced with a damper unit and used together with the opening/closing mechanism of the scanner section 2 of the first embodiment. In this case, it is possible to decelerate the rotation of the scanner section 2 in the closing direction to reduce the movement speed.

As heretofore described, the width of the recording apparatus can be reduced and a sufficient open angle of the scanner section 2 can be realized.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments, but is defined by the scope of the following claims.

## Claims

1. A recording apparatus, comprising:
a recording unit (3) configured to record an image on a sheet transported in a transport direction;
a cover (2) configured to be openable and closable with respect to a housing (8) in which the recording unit (3) is accommodated;
an opening/closing mechanism configured to control opening and closing of the cover (2);
a carriage (4) that includes a support portion, configured to mount the recording unit (3) thereon, and move between a first position and a second position in a movement direction intersecting the transport direction, the second position being on the opening/closing mechanism side with respect to the first position; and
a guide portion (7) configured to guide the carriage (4) at the support portion (4a),
wherein
the support portion (4a) protrudes in the movement direction toward the opening/closing mechanism side with respect to the recording unit (3), the recording unit (3) overlaps the opening/closing mechanism as seen from the movement direction, and the support portion (4a) on the opening/closing mechanism side overlaps the opening/closing mechanism as seen from the transport direction when the carriage (4) is at the second position.

2. The recording apparatus according to Claim 1,
wherein the guide portion (7) has a first guide surface (7a), and
wherein the support portion (4a) has a first sliding surface (24a) that is configured to slide over the first guide surface (7a).

3. The recording apparatus according to Claim 2, wherein the first sliding surface (24a) is disposed on both sides of the support portion (4a) in the movement direction.

4. The recording apparatus according to Claim 3,
wherein the carriage (4) is capable of mounting a plurality of recording units (3a, 3b) thereon, and
wherein a width of the first sliding surface (24a) on both sides in the movement direction is greater than 1.5 times a width of the plurality of recording units (3a, 3b).

5. The recording apparatus according to any one of Claims 2 to 4,
wherein the guide portion (7) has a second guide surface (7b) above the first guide surface (7a), and
wherein the support portion (4a) has a second sliding surface (24b) that is configured to slide over the second guide surface (7b).

6. The recording apparatus according to any one of Claims 1 to 5, comprising:
a transport roller (10) that is configured to transport the sheet in the transport direction; and
a gear (12) that is configured to rotate the transport roller (10),
wherein, when the carriage (4) is at the second position, the support portion (4a) on the opening/closing mechanism side overlaps the gear (12) as seen from the transport direction.

7. The recording apparatus according to Claim 6, wherein the transport roller (10) is disposed between the guide portion (7) and the opening/closing mechanism in the transport direction.

8. The recording apparatus according to Claim 6 or 7, comprising an output roller (11) that is configured to transport, downstream in the transport direction, the sheet transported by the transport roller (10).

9. The recording apparatus according to any one of Claims 6 to 8, comprising:
a code wheel (13) that is configured to measure a rotation amount of the transport roller (10),
wherein the support portion (4a) on the opening/closing mechanism side does not overlap the code wheel (13) as seen from the transport direction when the carriage (4) is at the second position.

10. The recording apparatus according to any one of Claims 1 to 9, wherein the opening/closing mechanism includes a stay (5) that is configured to support the cover (2) in an open position and a rail mechanism (6) that is configured to guide a movement of the stay (5).

11. The recording apparatus according to Claim 10, wherein the opening/closing mechanism is disposed in the housing (8) when the cover (2) closes.

12. The recording apparatus according to Claim 11, wherein an end portion of the stay (5) on the housing (8) side is located below the guide portion (7) in a state in which the cover (2) is closed.

13. The recording apparatus according to any one of Claims 1 to 9, wherein the opening/closing mechanism includes a braking unit that is configured to perform braking when the cover (2) closes.

14. The recording apparatus according to any one of Claims 1 to 13, comprising:
a power supply (9) that is configured to supply an electric current to the recording apparatus,
wherein the power supply (9) overlaps the opening/closing mechanism as seen from the transport direction.

15. The recording apparatus according to any one of Claims 1 to 14, wherein the cover (2) is a scanner section that is configured to scan an image.
